# EUROPEAN PATENT SPECIFICATION

(11) **EP 2 281 735 B1**
(45) Date of publication and mention of the grant of the patent: **16.07.2014**
(21) Application number: 10170989.7
(22) Date of filing: 28.07.2010
(51) Int. Cl.: B62J 6/02, B62J 17/06, B60Q 1/04

(54) **Motorcycle**
Motorrad
Motocyclette

(30) Priority: 04.08.2009 JP 2009181959
(43) Date of publication of application: 09.02.2011
(73) Proprietor: Yamaha Hatsudoki Kabushiki Kaisha, Iwata-shi, Shizuoka 438-8501 (JP)
(72) Inventor: Isayama, Hiroyuki, Shizuoka-ken (JP)
(74) Representative: Grünecker, Kinkeldey, Stockmair & Schwanhäusser

(56) References cited:
- WO-A1-2006/064122
- DE-A1-102006 041 547
- GB-A- 2 327 260
- JP-A- 7 291 165
- JP-A- 11 278 334
- JP-A- 2006 044 321
- US-A- 4 121 278

## Description

### BACKGROUND OF THE INVENTION

### Field of the Invention

The present invention relates to motorcycles, and more specifically to a motorcycle which has lighting equipment provided at a front portion of a motorcycle body, a front cover covering the motorcycle body from the front, and a back cover covering a back surface of the front cover and the lighting equipment from behind.

### Description of the Related Art

Conventionally, there are motorcycles comprising a front cover which is formed to cover the motorcycle body from the front and to surround lighting equipment including a headlight, flashers, etc; and a back cover which covers a back surface of the front cover and the lighting equipment from behind. In such a motorcycle as this, the lighting equipment and the back cover are individually mounted to the front cover. In other words, the front cover is formed with mounting portions for mounting the lighting equipment, and mounting portions for mounting the back cover.

In some of these motorcycles, the lighting equipment is formed into a long shape along the front cover for such purposes as to incorporate a plurality of bulbs arranged in a width direction of the motorcycle, and to improve esthetic appeal of the lighting equipment. For example, in the motorcycle which is disclosed in the Japanese patent No. 3263823, which is considered as the closest prior art, the lighting equipment is so long, that the front cover's upper portion which covers an upper region of the lighting equipment and the front cover' s lower portion which covers a lower region of the lighting equipment are connected with each other by a portion (which surrounds a rear end region of the lighting equipment), and this portion has a smaller width than the length of the lighting equipment.

In those motorcycles where their lighting equipment is formed to extend along the front cover, the front cover must have a large opening in order to expose a front surface of the lighting equipment, and for this reason the front cover has a decreased rigidity. Then, there is a problem that the front cover, which has a decreased rigidity, has a decreased supporting strength for supporting the back cover when the back cover is mounted to the front cover. There is another problem which is caused by a large size of the lighting equipment. Specifically, since the large lighting equipment inevitably has an increased depth, a distance between the front cover and the back cover is also increased. Therefore, when a motorcycle has large lighting equipment and when the back cover is of a design for mounting directly to the front cover, the front cover must be formed with long mounting portions for mounting the back cover, i.e. the mounting portions must be extended significantly in a backward direction from the front cover toward the back cover. This results in a decreased rigidity of the mounting portions and decreased strength for supporting the back cover. Further, large lighting equipment is an obstacle which limits the location where the mounting portions can be formed in the front cover.

### SUMMARY OF THE INVENTION

Therefore, a primary object of the present invention is to provide a motorcycle which is capable of reducing a decrease in supporting strength for supporting the back cover while increasing freedom in selecting locations for mounting portions to which the back cover is mounted, even when the lighting equipment is made long along the front cover.

According to an aspect of the present invention, there is provided a motorcycle which includes: left and right lighting equipment each including at least one first mounting portion and at least one second mounting portion; a front cover having a left and right opening, each *with a closed edge line* for the lighting equipment to expose a front surface thereof, mounted to expose the front surface of the lighting equipment from the opening and connected with the lighting equipment via the first mounting portion; *wherein the opening has an upper edge portion and a lower edge portion which are formed to follow the front surface of the lighting equipment;* and a back cover mounted to cover the lighting equipment and the front cover from behind, and connected with the lighting equipment via the second mounting portion, wherein the each lighting equipment has a plurality of second mounting portions, the back cover having as plurality of second fastening portions for fastening to the second mounting portions, and an edge portion formed to follow an edge portion of the front cover, the motorcycle further comprising fasteners for fastening the second fastening portions to the second mounting portions, the second fastening portions having a hole for insertion of the fastener, the hole having a greater diameter than a diameter of the fastener.

According to the present invention, the lighting equipment has the first mounting portion and the second mounting portion, and the front cover is connected with the lighting equipment via the first mounting portion whereas the back cover is connected with the lighting equipment via the second mounting portion. Since the back cover is mounted to the lighting equipment as described, it is possible to reduce unwanted decrease in the supporting strength to support the back cover even in cases where the front cover has a decreased rigidity. Also, the second mounting portion to which the back cover is mounted is included in the Lighting equipment, and a distance between the back cover and the lighting equipment is short. This makes it possible to shorten the second mounting portion. Therefore, it becomes easy to ensure that the second mounting portion has an appropriate rigidity, and it is now possible to reduce undue decrease in the supporting strength to support the back cover. Further, the lighting equipment is no longer an obstacle in selecting a position of the second mounting portion, so the arrangement increases freedom in selecting locations for the second mounting portion.

In this case, a slight positional error between the second fastening portion and the second mounting portion is acceptable. Utilizing this as an advantage, if the position of the second fastening portion or the position of the second mounting portion is out of a proper location due to manufacturing error, the second fastening portion and the second mounting portion are fixed to each other by a fastener, as slightly out of alignment. This reduces unwanted gaps between the edge portion of the front cover and the edge portion of the back cover.

Preferably, the front cover has a first fastening portion for fastening to the first mounting portion. With this arrangement, the first mounting portion and the first fastening portion are fitted to each other, thereby being restricted in relative movement in directions perpendicular to a direction of the fitting. In this case, the arrangement makes it possible to establish a position for the first mounting portion of the front cover by means of the first mounting portion of the lighting equipment. As a result, the arrangement is capable of reducing relative positional error between the lighting equipment and an edge portion of the opening in the front cover. Specifically, it becomes possible to provide an appropriate clearance between the edge portion of the front cover opening and the front surface of the lighting equipment.

Further preferably, the lighting equipment has a plurality of the first mounting portions, and the first mounting portions are formed in a single member which is included in the lighting equipment. If all of the first mounting portions are not formed in a single member; for example, in a case where some of the first mounting portions are formed in a reflector of the lighting equipment while the rest of the first mounting portions are formed in a lens cover of the lighting equipment, a relative positional error between the reflector and the lens cover leads to a relative positional error between the lighting equipment and the edge portion in the opening of the front cover. By forming the first mounting portions all in a single member which is included in the lighting equipment, the arrangement reduces relative positional error in these first mounting portions. As a result, the arrangement is capable of reducing relative positional error between the lighting equipment and an edge portion of the opening in the front cover.

Preferably, the back cover has an edge portion formed to follow an edge portion of the front cover, and the first mounting portion and the second mounting portion are formed in a single member included in the Lighting equipment. If the first mounting portion and the second mounting portion are formed in different members; for example, in a case where the second mounting portion is formed in a reflector of the lighting equipment while the first mounting portion is formed in a lens cover of the lighting equipment, a relative positional error between the reflector and the lens cover can be a cause of a gap between the edge portion of the front cover and the edge portion of the back cover. However, the first mounting portion and the second mounting portion are formed on a single member which is included in the lighting equipment, so relative positional error between the first mounting portion and the second mounting portion is reduced. As a result, the arrangement reduces unwanted gaps between the edge portion of the front cover and the edge portion of the back cover.

It should be noted here that the opening in the front cover may have a closed edge line (i.e. an opening having a single, continuous edge line without breaks). In other words, a portion of the front cover above the lighting equipment and a portion of the front cover below the lighting equipment need not be connected with each other at an end portion of the lighting equipment.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a motorcycle according to an embodiment of the present invention.
Fig. 2 is a front view showing an upper portion of a front cover, and lighting equipment, of the motorcycle.
Fig. 3 is an exploded perspective view of the front cover, the lighting equipment and a back cover, of the motorcycle taken from an obliquely front view point.
Fig. 4 is an exploded perspective view of the front cover, the lighting equipment and the back cover taken from an obliquely rear view point.
Fig. 5 is a side view of the front cover and the lighting equipment.
Fig. 6 is a perspective view of the lighting equipment taken from an obliquely rear view point.
Fig. 7 is an exploded perspective view of the lighting equipment.
Fig. 8 is a front view of the lighting equipment, with a lens cover removed.
Fig. 9 is a sectional view of the front cover and the lighting equipment taken in lines IX-IX in Fig. 8.
Fig. 10 is a sectional view of the front cover and the lighting equipment taken in lines X-X in Fig. 8.
Fig. 11 is a sectional view of the front cover and the back cover taken in lines XI-XI in Fig. 4.
Fig. 12 is a sectional view of the front cover and the back cover taken in lines XII-XII in Fig. 5.

### DETAILED DESCRIPTION OF THE PREFERRED EMBODIMENTS

Hereinafter, embodiments of the present invention will be described with reference to the drawings.

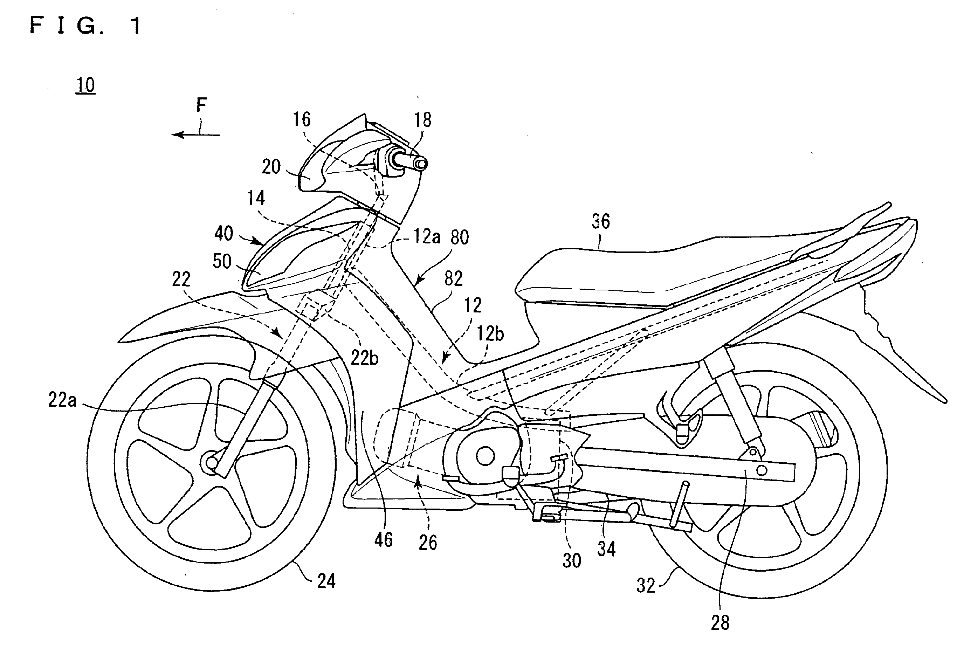

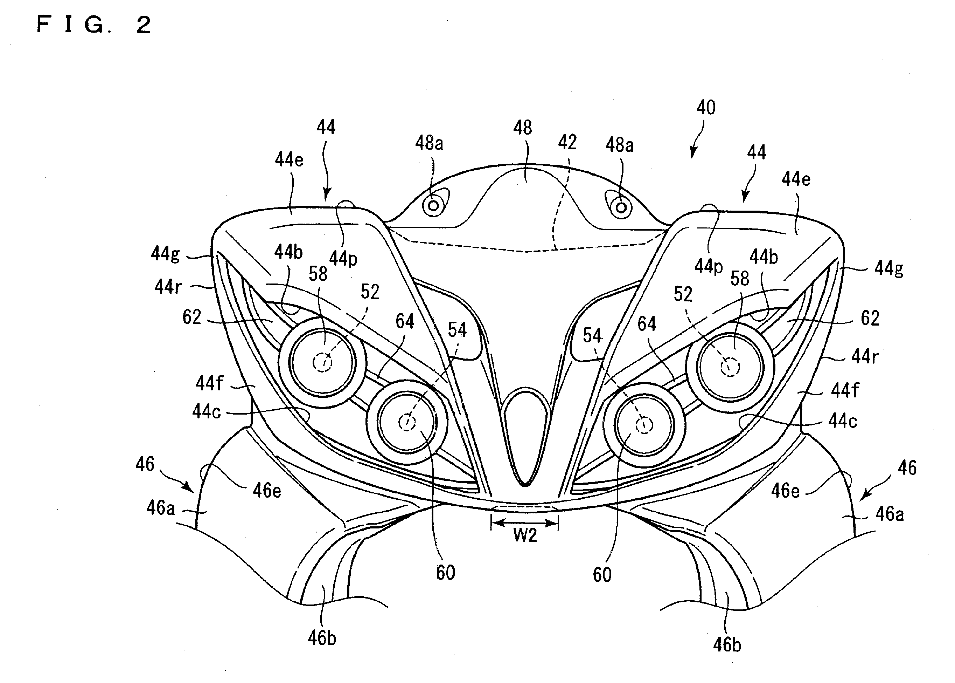

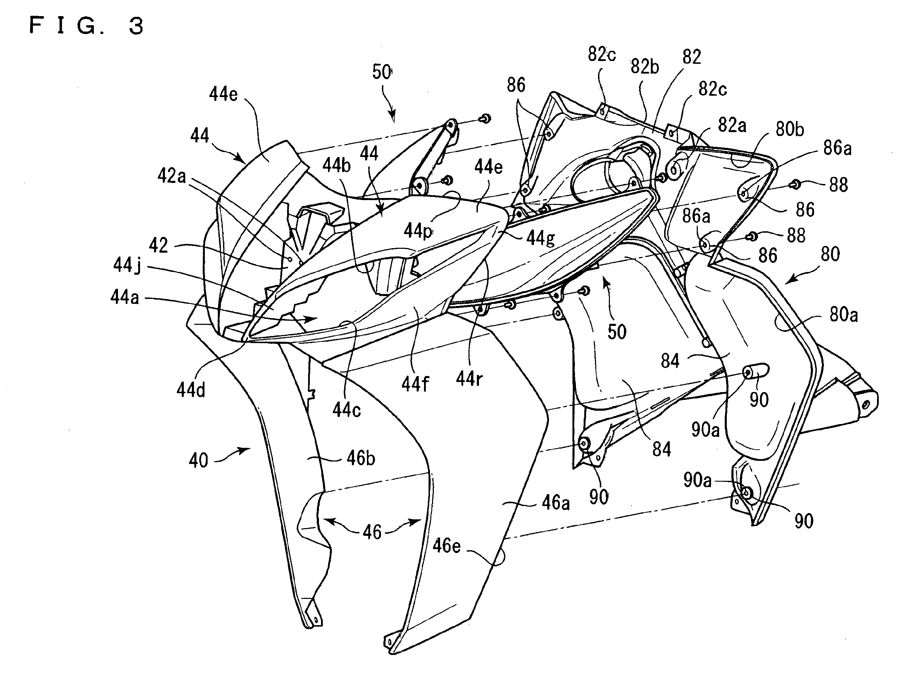

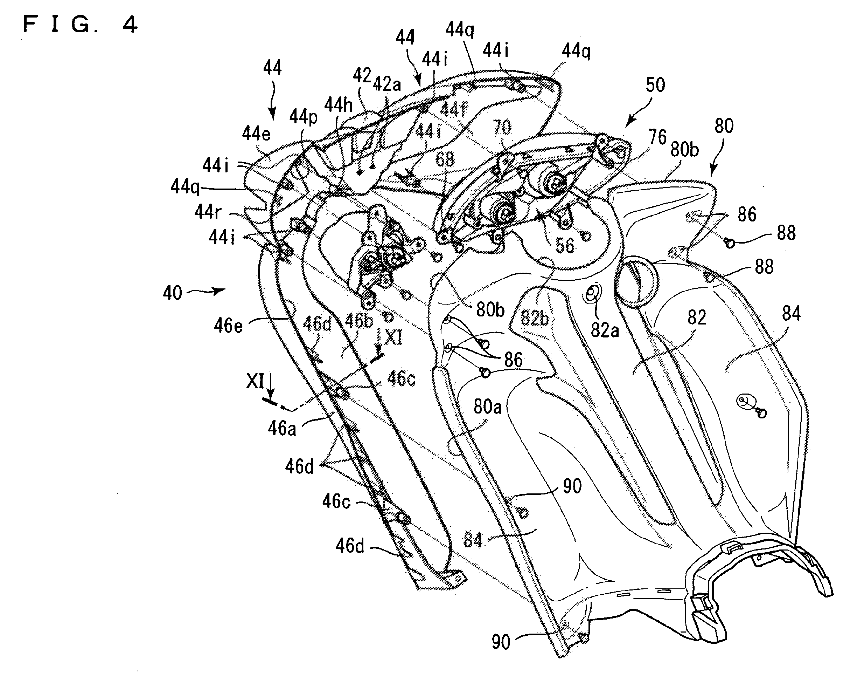

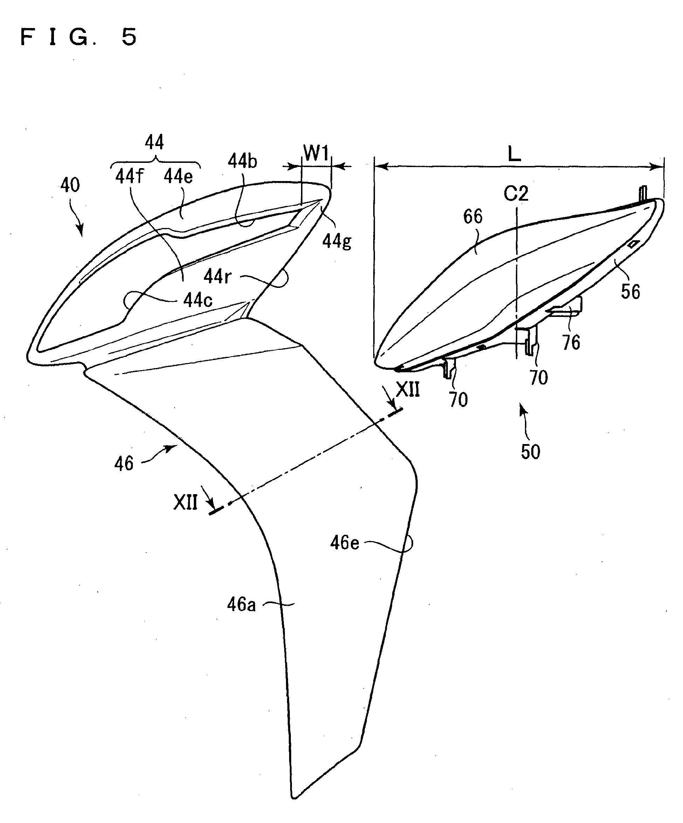

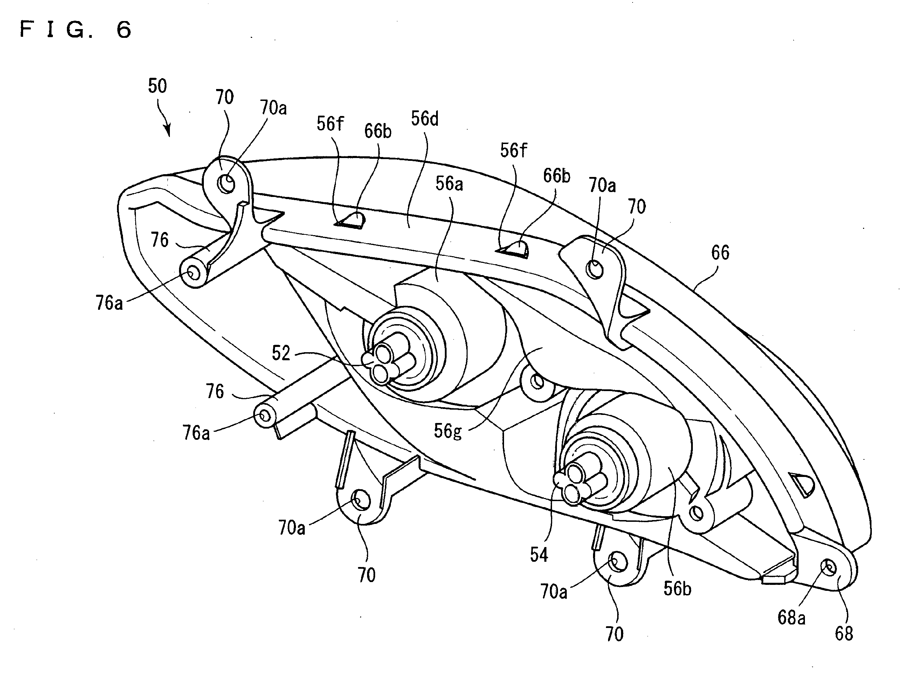

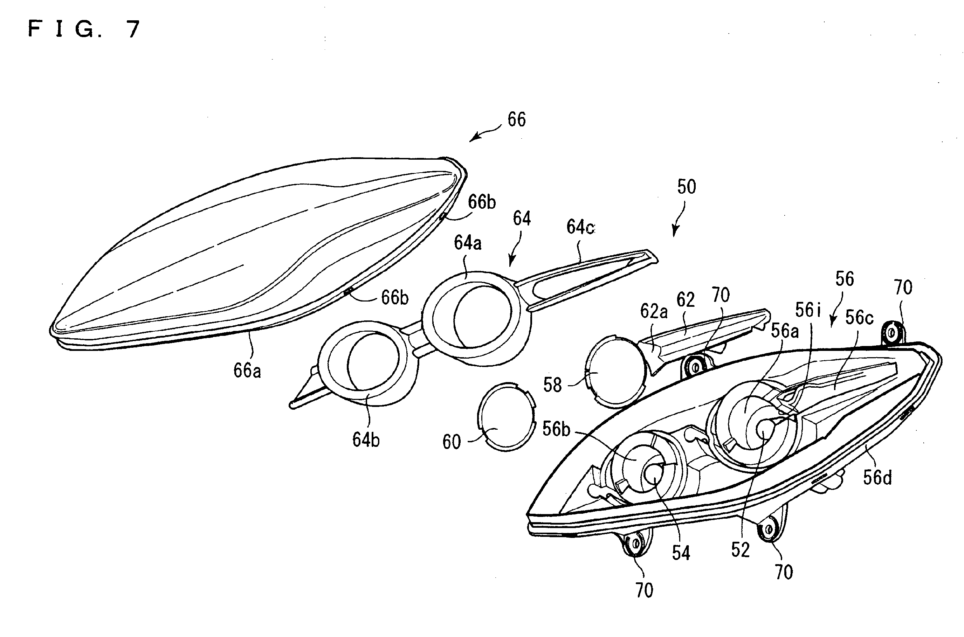

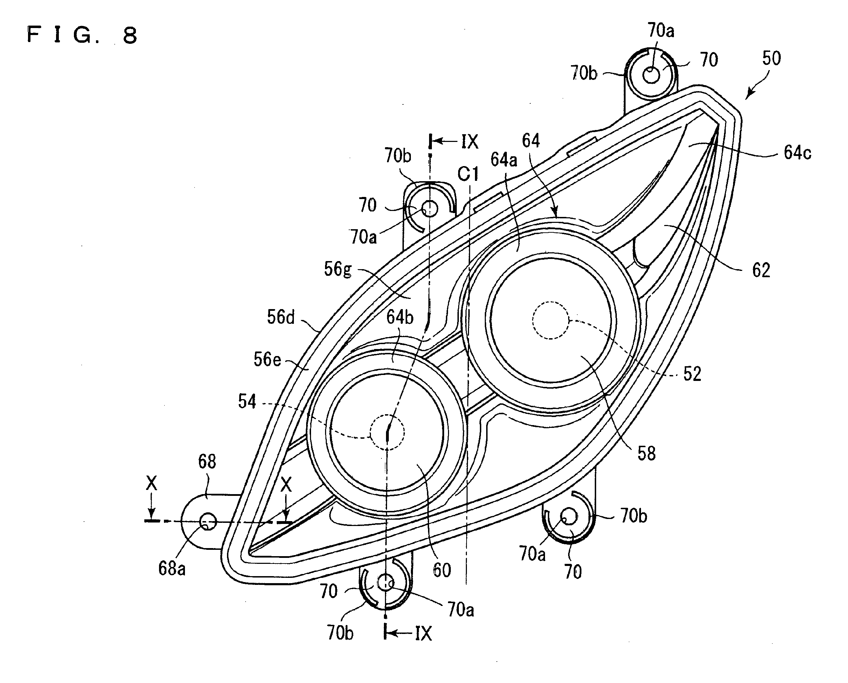

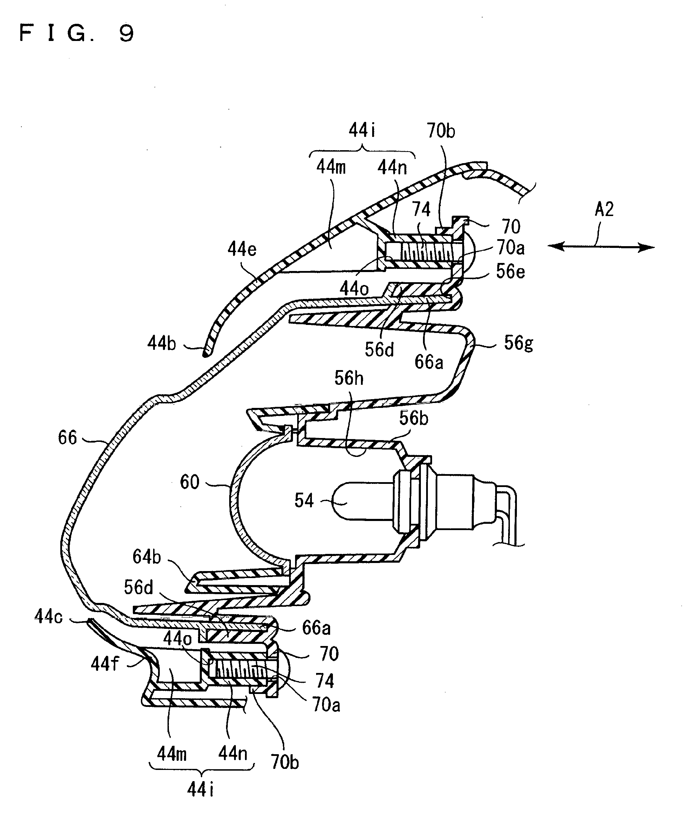

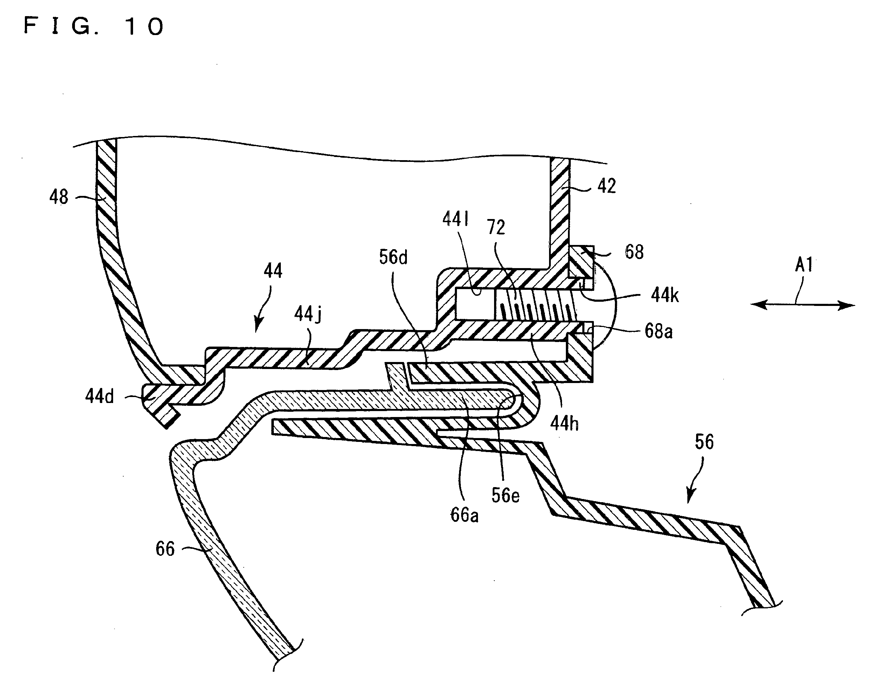

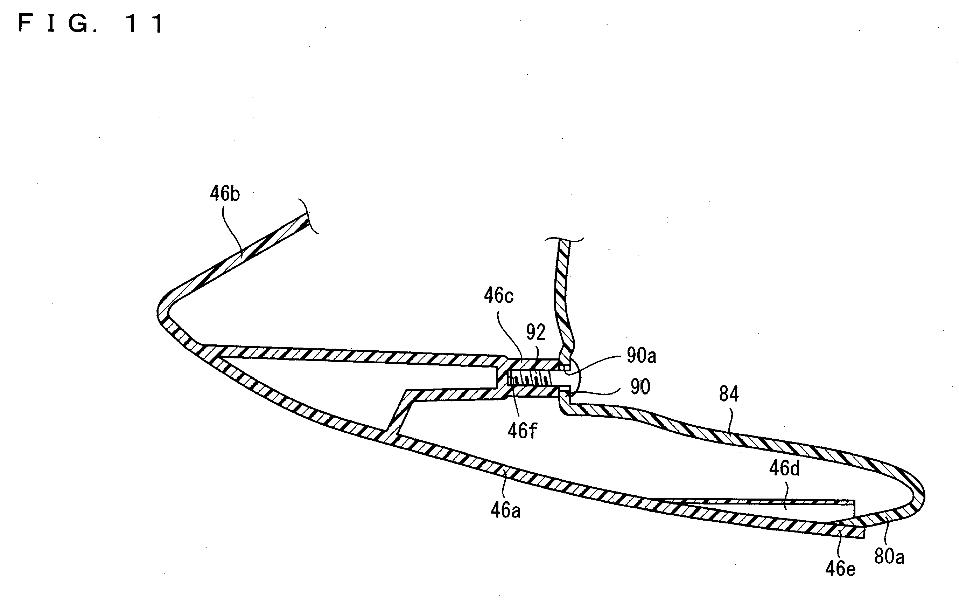

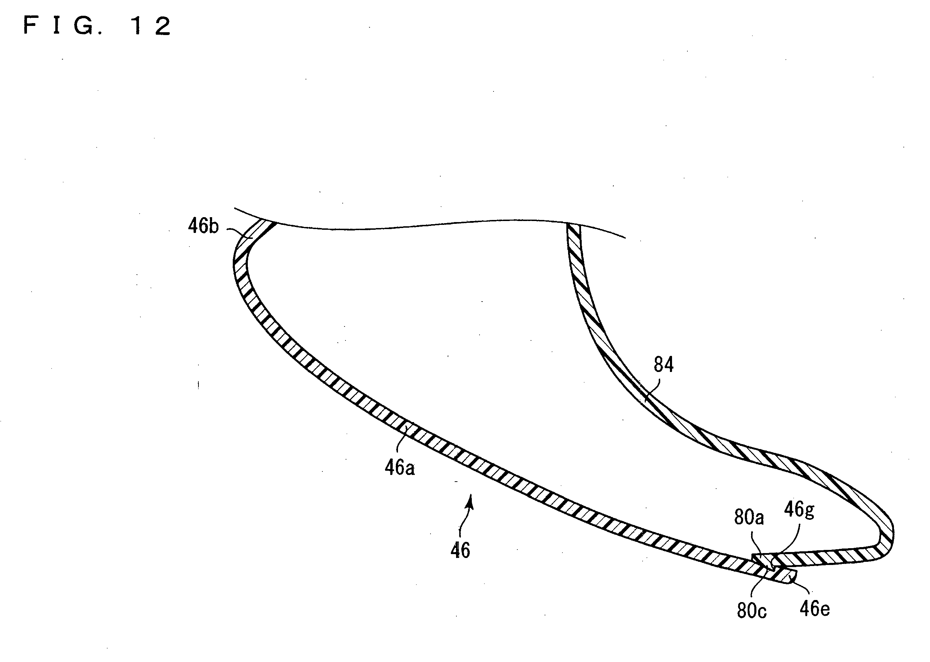

Fig. 1 is a side view of a motorcycle 10 according to an embodiment of the present invention. Fig. 2 is a front view showing an upper portion of a front cover 40, and lighting equipment 50, of the motorcycle 10. It should be noted that Fig. 2 does not show a lens cover 66, which is supposed to be in a front surface of the lighting equipment 50, so lenses 58, 60 disposed behind the lens cover 66 are exposed in Fig. 2. Fig. 3 is an exploded perspective view of the front cover 40, the lighting equipment 50 and a back cover 80, of the motorcycle 10 taken from an obliquely front view point. Fig. 4 is an exploded perspective view of the front cover 40, the lighting equipment 50 and the back cover 80 taken from an obliquely rear view point. Fig. 5 is a side view of the front cover 40 and the lighting equipment 50. Fig. 6 is a perspective view of the lighting equipment 50 taken from an obliquely rear view point. Fig. 7 is an exploded perspective view of the lighting equipment 50. Fig. 8 is a front view of the lighting equipment 50, with a lens cover 66 removed. Fig. 9 is a sectional view of the front cover 40 and the lighting equipment 50 taken in lines IX-IX in Fig. 8. Fig. 10 is a sectional view of the front cover 40 and the lighting equipment 50 taken in lines X-X in Fig. 8. Fig. 11 is a sectional view of the front cover 40 and the back cover 80 taken in lines XI-XI in Fig. 4. Fig. 12 is a sectional view of the front cover 40 and the back cover 80 taken in lines XII-XII in Fig. 5. Note that a character "F" in the drawings indicates a forward direction of the motorcycle.

As shown in Fig. 1, the motorcycle 10 includes a motorcycle body frame 12. The body frame 12 has a head pipe 12a provided at a front end thereof, and a main frame 12b extending from the head pipe 12a in an obliquely rearward and downward direction.

The head pipe 12a supports a steering shaft 14, which extends obliquely in an up-down direction. The steering shaft 14 has an upper end portion, where a handle bar 16 is fixed, and the handle bar 16 has two end portions each provided with a grip 18. A headlight 20 is disposed ahead of the handle bar 16.

A front fork 22 is disposed below the steering shaft 14. The front fork 22 has a left-and-right pair of suspensions 22a and a bridge 22b which connects upper end portions of the suspensions 22a. The steering shaft 14 has a lower end portion, which is fixed to the bridge 22b. The suspensions 22a have lower end portions, which rotatably support a front wheel 24. The handle bar 16, the front fork 22 and the front wheel 24 are pivotable integrally with each other, around the steering shaft 14. Thus, the motorcycle 10 is steerable with the handle bar 16.

An engine 26 is disposed below a rear portion of the main frame 12b. The engine 26 is fixed to the main frame 12b. Behind the engine 26, a swing arm 28 extends in a fore-aft direction. The swing arm 28 has a front end portion, which is fastened to a bracket 30 provided at a rear end portion of the main frame 12b. A rear wheel 32 is supported by a rear end portion of the swing arm 28. Driving power from the engine 26 is transmitted to the rear wheel 32 via transmission members (not illustrated) such as a chain, belt, or the like which are housed in a case 34. A seat 36 is disposed above the rear wheel 32.

The motorcycle 10 has, in its front region, the front cover 40 which covers the motorcycle body from the front; a left-and-right pair of lighting equipment 50 arranged on the left and the right sides with the motorcycle' s widthwise center therebetween; and the back cover 80 which covers the back surface of the front cover 40 and the lighting equipment 50, from behind.

First, the front cover 40 will be described.

The front cover 40 is located in front of the head pipe 12a and covers the head pipe 12a, a wire harness (not illustrated) and other members which are provided along the head pipe 12a, from the front.

Referring to Fig. 2 and Fig. 3, the front cover 40 has a front center cover portion 42, a pair of front side-cover portions 44, and a pair of lower side-cover portions 46.

The front center cover portion 42 has a plurality (two in this embodiment) of mounting holes 42a, and is in front of the head pipe 12a. The front center cover portion 42 is mounted onto a bracket (not illustrated), which extends ahead from the head pipe 12a. As shown in Fig. 4 in further detail, the mounting holes 42a are located in a lower portion of the front center cover portion 42. Bolts or screws (not illustrated) are inserted through the mounting holes 42a from the front, to fasten the bracket and the front center cover portion 42 with each other. Thus, the front cover 40 is supported by the body frame 12.

The front side-cover portions 44 are formed to extend from the front center cover portion 42 in the motorcycle' s widthwise outward directions. Namely, the front side-cover portions 44 are provided on the left and the right sides of the front center cover portion 42, one on the left side and the other on the right side.

Each front side-cover portion 44 has an opening 44a to expose a front surface of the lighting equipment 50. The opening 44a has an upper edge portion 44b and a lower edge portion 44c. In a plan view, both of these edge portions start from a front end portion 44d located on the motorcycle's widthwise center-side, extend obliquely rearward in a widthwise outer direction of the motorcycle, and then curve rearward. Also, the upper edge portion 44b and the lower edge portion 44c are formed to follow the front surface of the lighting equipment 50 (i.e. to follow the surface of the lens cover 66). In other words, the upper edge portion 44b and the lower edge portion 44c of the opening 44a extend along the surface of the lighting equipment 50, with a slight clearance to the surface of the lighting equipment 50 (see Fig. 9).

With the opening 44a being formed as described, each front side-cover portion 44 has an upper cover portion 44e which provides covering above the lighting equipment 50; a lower cover portion 44f which provides covering below the lighting equipment 50; and a connecting portion 44g which connects the upper cover portion 44e and the lower cover portion 44f with each other while covering a rear end (end portion on an outer side in the motorcycle's width direction) of the lighting equipment 50.

Referring to Fig. 4, Fig. 9 and Fig. 10, the front side-cover portion 44 has a fastening portion 44h and a plurality (four in this embodiment) of fastening portions 44i. The fastening portions 44h, 44i each represent the first fastening portion. The fastening portion 44h and the fastening portions 44i are provided in an inner surface (back surface) of the front side-cover portion 44, to surround the opening 44a. The fastening portions 44h, 44i are positioned to correspond to front cover mounting portions 68, 70 respectively. Namely, the fastening portions 44h, 44i project rearward from the inner surface of the front side-cover portion 44, and thus the fastening portions 44h, 44i are opposed to the front cover mounting portions 68, 70 respectively in a fore-aft direction. The fastening portion 44h is fastened to the front cover mounting portion 68 whereas the fastening portions 44i are fastened to their respective front cover mounting portions 70.

Referring to Fig. 3 and Fig. 10, the front cover 40 has an upper portion which has a recessed center region. Namely, the front center cover portion 42 is located at a more rearward position than a front end portion 44d of the front side-cover portion 44, and has an inner wall portion 44j extending rearward from the front end portion 44d. The fastening portion 44h extends rearward along the inner wall portion 44j. The fastening portion 44h has, at its rear end, a rearward projecting annular projection 44k. The projection 44k fits into a hole 68a in the front cover mounting portion 68. Also, the rear end of the fastening portion 44h has a hole 441 extending in a forward direction (a longitudinal direction of the fastening portion 44h).

Referring to Fig. 9, each fastening portion 44i has a wall portion 44m extending rearward from the inner surface of the front side-cover portion 44, and a cylindrical projection 44n formed at a rear end portion of the wall portion 44m and extending rearward. The projection 44n has a rear end formed with a hole 44o extending forward (longitudinal direction of the fastening portion 44i). By forming the fastening portions 44i according to the arrangement as described above, it becomes possible to reduce unwanted recesses from being formed in the surface of the front cover 40 during a molding process of the front cover 40.

As shown in Fig. 3 and Fig. 4, the left-and-right pair of lower side-cover portions 46 extend downward from the left-and-right pair of front side-cover portions 44. The lower side-cover portions 46 are disposed to cover the motorcycle body from sides, i.e., from widthwise outer directions of the motorcycle.

Each lower side-cover portion 46 has a platy outer panel portion 46a and a platy inner panel portion 46b. The outer panel portion 46a is provided to cover a space behind the front wheel 24 from a widthwise outer direction of the motorcycle. The inner panel portion 46b is provided to extend from a front edge of the outer panel portion 46a toward a widthwise center-side of the motorcycle so as to guide an air flow to the engine 26 when the motorcycle is running. The lower side-cover portions 46 and the front side-cover portions 44 are made of resin, and are formed integrally with each other.

Referring to Fig. 3, Fig. 4 and Fig. 11, each lower side-cover portion 46 has a plurality of back cover mounting portions 46c for mounting the back cover 80. The back cover mounting portions 46c are arranged in an up-down direction, and each protrudes rearward from an inner surface of the lower side-cover portion 46. Also, the lower side-cover portion 46 has an inner side formed with a plurality of clip portions 46d. The clip portions 46d are arranged in an up-down direction along a rear edge portion 46e of the lower side-cover portion 46, and each protrudes rearward from an inner surface of the outer panel portion 46a. Likewise, the upper cover portion 44e has its inner side formed with a plurality of rearward protruding clip portions 44q along an upper edge portion 44p.

As shown in Fig. 2, a center cover 48 is provided in front of the front center cover portion 42 for covering the front center cover portion 42 from the front. The center cover 48 is mounted to the front cover 40. The center cover 48 has an upper region formed with two mounting portions 48a.

Next, the lighting equipment 50 will be described.

Referring to Fig. 2, Fig. 7 and Fig. 8, each lighting equipment 50 includes a plurality (two in this embodiment) of bulbs (light emitting devices) 52, 54, a reflector 56, a plurality (two in this embodiment) of lenses 58, 60, a side lens 62, a lens frame 64 and a lens cover 66.

The bulbs 52, 54 are arranged widthwise of the motorcycle. The bulb 52 is disposed at a more outwardly widthwise position of the motorcycle than the bulb 54. In the present embodiment, the bulb 52 is provided at a slightly higher position than the bulb 54. The bulb 52 on the outer side is a flasher bulb for example, for indicating the direction in which the motorcycle is turning whereas the bulb 54 on the widthwise center-side of the motorcycle is for a position indicator lamp for example, for indicating the presence of the motorcycle.

The reflector 56 has a long oval shape in a front view, is made of a resin as an integral part, and holds the bulbs 52, 54.

Referring to Fig. 6 through Fig. 9, the reflector 56 includes bulb holder portions 56a, 56b, a beam guide groove 56c, an outer frame portion 56d, a groove 56e, mounting holes 56f and a wall portion 56g.

Since the reflector 56 includes the bulb holder portions 56a, 56b and other portions and is substantially thick in a fore-aft direction, it has a greater rigidity than the front cover 40 which is made primarily of platy portions (e.g. the upper cover portion 44e, and the connecting portion 44g which connects the upper cover portion 44e and the lower cover portion 44f).

The bulb holder portions 56a, 56b are arranged in a longitudinal direction of the reflector 56 (see Fig. 7), and extended rearward (see Fig. 6). Each of the bulb holder portions 56a, 56b is formed like a forward opening bowl to hold a base portion of respective one of the bulbs 52, 54. Each of the bulb holder portions 56a, 56b has an inner surface 56h, which serves as a reflection surface for reflecting the light from the bulb 52 or 54 in a forward direction (see Fig. 9). The inner surface 56h is coated with a light-reflecting material. The bulb holder portion 56a has a cutout 56i on its side closer to the side lens 62.

The light guide groove 56c extends obliquely rearward from an edge of the cutout 56i. Therefore, light thrown from the bulb 52 in the obliquely rearward direction to go through an inside space of the cutout 56i travels obliquely rearward through the inside the light guide groove 56c. Thus, the light from the bulb 52 is not only reflected by the inner surface of the bulb holder portion 56a and thrown forward through the lens 58 but also travels through the cutout 56i and is thrown in an outwardly width direction of the motorcycle through the side lens 64.

The outer frame portion 56d surrounds the bulb holder portions 56a, 56b, the light guide groove 56c, etc. When the reflector 56 and the lens cover 66 are assembled with each other, the outer frame portion 56d surrounds an edge portion 66a of the lens cover 66.

The groove 56e is formed, as a surrounding a loop, in a side surface of the outer frame portion 56d (see Fig. 8). The mounting holes 56f are formed in an outer circumferential surface of the outer frame portion 56d, and the wall portion 56g is formed to connect the bulb holder portions 56a, 56b with the outer frame portion 56d (see Fig. 6).

Referring to Fig. 7 and Fig. 8, the lenses 58, 60 cover the bulbs 52, 54 respectively, from the front. The side lens 62 has a front end 62a at a widthwise outward position of the motorcycle with respect to the bulb 52, and the side lens 62 extends rearward from the front end 62a. Therefore, the side lens 62 is oblong, and its outer surface is oriented in a widthwise outward direction of the motorcycle.

The lens frame 64 has an annular front frame portion 64a surrounding the lens 58, an annular front frame portion 64b surrounding the lens 60, and a side frame portion 64c surrounding the side lens 62.

The lens cover 66 is transparent for example, and is formed like an oblong bowl correspondingly to the shape of the reflector 56. The edge portion 66a of the lens cover 66 is formed to follow an outer edge of the reflector 56, and the edge portion 66a is formed with pawls 66b extending outward of the lens cover 66. When assembling the lens cover 66 to the reflector 56, the edge portion 66a is fitted into the groove 56e while the pawls 66b are fitted into their respective mounting holes 56f. The lens cover 66 is mounted to the reflector 56 to cover the front of the reflector 56, the lenses 58, 60, the side lens 62 and the lens frame 64.

As shown in Fig. 6, Fig. 8 and Fig. 9, the lighting equipment 50 has the front cover mounting portion 68 and a plurality (four in this embodiment) of the front cover mounting portions 70. The front cover mounting portion 68 and the front cover mounting portions 70 are members for mounting the lighting equipment 50 onto the front cover 40, and each represents the first mounting portion. The front cover mounting portion 68 and the front cover mounting portions 70 are formed in the same, single member. In the present embodiment, the front cover mounting portion 68 and the front cover mounting portions 70 are all formed in the reflector 56, and they are spaced from each other on the outer frame portion 56d of the reflector 56. Namely, the front cover mounting portion 68 and the front cover mounting portions 70 are disposed, at a space therebetween, to surround the outer frame portion 56d. Also, the front cover mounting portion 68 and the front cover mounting portions 70 protrude from the outer frame portion 56d of the reflector 56 perpendicularly to the mounting direction (fore-aft direction) in which the lighting equipment 50 and the front cover 40 are mounted. In the present embodiment, the outer frame portion 56d is provided with two front cover mounting portions 70 which protrude upward above the lighting equipment 50, and two front cover mounting portions 70 which protrude downward below the lighting equipment 50. Also, the outer frame portion 56d has an end portion on the widthwise center-side of the motorcycle, where the front cover mounting portion 68 is provided, protruding toward the widthwise center of the motorcycle.

The front cover mounting portion 68 has a through-hole 68a which penetrates the fitting in a fore-aft direction. Likewise, each of the front cover mounting portions 70 has a through-hole 70a which penetrates the fitting in a fore-aft direction.

Referring to Fig. 10, the hole 68a in the front cover mounting portion 68 has an inner diameter which is equal to an outer diameter of the projection 44k. Fitting the projection 44k into the hole 68a of the front cover mounting portion 68 establishes a positioning of the fastening portion 44h. Namely, as the fastening portion 44h and the front cover mounting portion 68 are fitted to each other, their relative movement in directions perpendicular to the fitting direction (fore-aft direction indicated by Arrow A1) is restricted.

Referring to Fig. 8 and Fig. 9, the front cover mounting portion 70 has a surface to oppose to the projection 44n, and on this surface, is formed with generally C-shaped, forward-protruding holder portion 70b having a recessed inside. The holder portion 70b has an inner diameter which is equal to an outer diameter of the projection 44n. Thus, as the projection 44n is fitted into the inside recess of the holder portion 70b, a positioning of the fastening portion 44i is established. Namely, as the fastening portion 44i and the front cover mounting portion 70 are fitted to each other, their relative movement in directions perpendicular to the fitting direction (fore-aft direction indicated by Arrow A2) is restricted.

Then, as will become clear from Fig. 9 and Fig. 10, screws 72, 74 such as tapping screws are inserted into the holes 68a, 70a from behind, and then fitted into the holes 441, 44o of the fastening portions 44h, 44i, respectively. This fixes the fastening portions 44h, 44i and the front cover mounting portions 68, 70 respectively to each other. In other words, the front cover mounting portion 68 and the front cover mounting portions 70 are fastened to the front cover 40. This process mounts the lighting equipment 50 onto the back surface (inner surface) of the front side-cover portion 44 of the front cover 40 from behind, with the front surface of the lighting equipment 50 being exposed from the opening 44a.

It should be noted here that as shown in Fig. 10, the hole 68a in the front cover mounting portion 68 has a greater diameter than an outer diameter of the screw 72 which is inserted into the hole 68a. Also, the diameter of the hole 441 in the fastening portion 44h is so designed and the outer diameter of the screw 72 is so selected that the screw 72 can be threaded into the hole 461.

Also, the fastening portion 44i and the front cover mounting portion 70 may have a different fitting structure from the one described above as far as they have a male-female mating structure of corresponding sizes so that fitting the two to each other will establish the position of the fastening portion 44i. For example, the fastening portion 44i may have a recess and the front cover mounting portion 70 may have a projection to fit to.

Further, referring to Fig. 6, the lighting equipment 50 has a plurality (two in the present embodiment) of back cover mounting portions 76. The back cover mounting portions 76 are fastened to the back cover 80. Namely, the back cover mounting portions 76 are members for mounting the lighting equipment 50 onto the back cover 80, and each represents the second mounting portion. In the present embodiment, the back cover mounting portions 76 are formed in the reflector 56 like the front cover mounting portions 68, 70, to protrude rearward from the outer frame portion 56d of the reflector 56. The back cover mounting portions 76 are cylindrical, each having a forward-extending hole 76a at its center. The back cover mounting portions 76 are formed on each of the upper and lower regions in the outer frame portion 56d. Note, also, that the back cover mounting portions 76 are formed on a widthwise outer side with respect to the motorcycle, in the reflector 56. In other words, in a front view of the reflector 56, the back cover mounting portions 76 are on a more outer side in the motorcycle's width direction than a widthwise centerline C1 of the reflector 56 (see Fig. 8). Also, in a side view of the reflector 56, the back cover mounting portions 76 are on a more rearward side of the motorcycle than a lengthwise centerline C2 of the reflector 56 (see Fig. 5). The reflector 56 is formed in a shape which starts from its inner end portion, that is inner with respect to the motorcycle's width, (and is a place formed with the front cover mounting portion 68), and extends obliquely rearward as well as outwardly widthwise of the motorcycle. For this reason, a distance from a motorcycle's widthwise outer portion of the reflector 56 to the back cover 80 is shorter than a distance from the inner end portion of the reflector 56 to the back cover 80. Hence, by forming the back cover mounting portions 76 on an outside region of the reflector 56, it becomes possible to shorten the length of the back cover mounting portions 76. Also, the region formed with the back cover mounting portions 76 in the outer frame portion 56d extends rearward from the wall portion 56g. Therefore, it is possible to shorten the extended portion of the back cover mounting portion 76 extended from the outer frame portion 56d.

As has been described, the lighting equipment 50 has two bulbs 52, 54 arranged in the width direction of the front side-cover portion 44 (also in the motorcycle' s width direction in the present embodiment). Therefore, the lighting equipment 50 is long, along the front side-cover portion 44. Namely, the lighting equipment 50 extends toward a rear end portion 44r of the front side-cover portion 44. Again in other words, the lighting equipment 50 is formed in a shape which starts from its inner end portion, that is inner with respect to the motorcycle's width, and extending obliquely rearward in a widthwise outer direction of the motorcycle. Since the lighting equipment 50 is long, the opening 44a is also long (large). As a result, as shown in Fig. 5, the connecting portion 44g, which connects the rear end of the upper cover portion 44e and the rear end of the lower cover portion 44f with each other, has a small width W1. Specifically, the width W1 of the connecting portion 44g is smaller than a length L of the lighting equipment 50. Especially in the present embodiment, the lighting equipment 50 has the side lens 64 which extends rearward beyond the position of the bulb 52, and this makes the lighting equipment 50 even longer. As a result, the width W1 of the connecting portion 44g is smaller than a half of the length L of the lighting equipment 50. It should be noted here that a similar reduction in a width is also found in the front center cover portion 42 which is located between the left and the right front side-cover portions 44, with a lower end width W2 being smaller than the length L of the lighting equipment 50 (see Fig. 2).

As has been described so far, in the motorcycle 10, the front side-cover portion 44 which exposes the lighting equipment 50 has a large opening 44a. For this reason, the front side-cover portion 44 has a decreased rigidity. Namely, the upper cover portion 44e, the lower cover portion 44f and the connecting portion 44g in the front side-cover portion 44 can deform easily. So, even if there is a small alignment error between the fastening portions 44h, 44i and the corresponding front cover mounting portions 68, 70 resulting from manufacturing error of the front cover 40 or of the reflector 56, the front side-cover portion 44 may be deformed slightly in order to align the fastening portions 44h, 44i with the corresponding front cover mounting portions 68, 70. This makes it possible to provide an appropriate clearance between the edge portion of the opening 44a of the front side-cover portion 44 and the front surface of the lighting equipment 50.

In the present embodiment, all of the front cover mounting portions 68, 70 for fastening to the front cover 40 are used in positioning the front side-cover portion 44. However, only three or four of the front cover mounting portions 70 may be utilized for the positioning purpose. In this case, the other front cover mounting portions 70 need not be formed with the above-described holder portions 70b.

Next, the back cover 80 will be described.

Referring to Fig. 3 and Fig. 4, the back cover 80 has a center cover portion 82 and side cover portions 84.

The center cover portion 82 represents a widthwise center region of the back cover 80 and covers the head pipe 12a from behind. Also, the center cover portion 82 extends rearward and obliquely downward along the main frame 12b, covering the main frame 12b from above as well as from left and right (see Fig. 1). The center cover portion 82 has an upper region provided with a mounting hole 82a. The main frame 12b is provided with an upward protruding bracket (not illustrated). A bolt, screw or the like is inserted into the mounting hole 82a and is fixed to the bracket.

The center cover portion 82 has an upper edge portion 82b formed in an arc shape to surround an outer circumferential surface of the steering shaft 14. The upper edge portion 82b of the center cover portion 82 has its end regions formed with mounting portions 82c to oppose to the mounting portions 48a of the center cover 48 (see Fig. 3). The mounting portions 48a and the mounting portions 82c are fixed to each other with bolts, screws or the like.

The left and the right side cover portions 84 spread from the center cover portion 82 in widthwise outward directions of the motorcycle. The side cover portions 84 are provided to cover the front side-cover portions 44, the lighting equipment 50 and the lower side-cover portions 46, from behind. Like the front cover 40, the center cover portion 82 and the side cover portions 84 are made of resin, integrally with each other.

As shown in Fig. 3 and Fig. 4, the back cover 80 has a plurality of fastening portions 86. The fastening portions 86 each represent the second fastening portion. The fastening portions 86 are arranged along a side edge portion 80a of the back cover 80. Each of the fastening portions 86 is provided at a position corresponding to one of the back cover mounting portions 76. The fastening portion 86 has a through-hole 86a which penetrates the back cover 80 in a fore-aft direction. A screw 88 is inserted into the hole 86a from behind, and fastened to the hole 76a in the back cover mounting portion 76. This fixes the fastening portion 86 and the back cover mounting portion 76 to each other. In other words, the fastening portion 86 is fastened to the back cover mounting portion 76.

Referring also to Fig. 11, the side cover portion 84 has a plurality of fastening portions 90. Each of the fastening portions 90 is provided at a position corresponding to one of the back cover mounting portions 46c. The fastening portion 90 has a through-hole 90a which penetrates the back cover 80. A screw 92 is inserted into the hole 90a in the fastening portion 90 from behind, and fastened to the hole 46f in the back cover mounting portion 46c. This fixes the fastening portion 90 and the back cover mounting portion 46c to each other.

As shown in Fig. 3 and Fig. 4, the back cover 80 has an upper edge portion 80b and side edge portions 80a which are formed to follow the upper edge portion 44p and the rear end portions 44r, 46e of the front cover 40 respectively. Namely, the upper end portion 80b of the side cover portion 84 is formed to follow the upper edge portion 44p of the upper cover portion 44e in the front cover 40. Also, the side edge portion 80a of the side cover portion 84 are formed to follow the rear edge portion 44r of the lower cover portion 44f and the rear edge portion 46e of the outer panel portion 46a. The upper edge portion 80b of the side cover portion 84 is on an inner side of the upper edge portion 44p of the upper cover portion 44e whereas the side edge portion 80a of the side cover portion 84 is on an inner side of the rear edge portion 44r in the lower cover portion 44f and on an inner side of the rear edge portion 46e in the outer panel portion 46a (see Fig. 11 and Fig. 12).

The side edge portion 80a of the back cover 80 is caught between each pair of the clip portion 46d and the rear edge portion 46e of the outer panel portion 46a, so the side edge portion 80a is restricted in its movement with respect to the rear edge portion 46e. The upper edge portion 80b of the back cover 80 is caught between each pair of the clip portion 44q and the upper edge portion 44p, so the upper edge portion 80b is restricted in its movement with respect to the upper edge portion 44p. Thus, the back cover 80 is positioned by the upper edge portion 80b and the side edge portions 80a, with respect to the front cover 40.

It should be noted here that as shown in Fig. 12, the side edge portion 80a of the back cover 80 and the rear edge portion 46e of the outer panel portion 46a are hooked to each other, preventing the side edge portion 80a from dislocating rearward with respect to the rear edge portion 46e. In the present embodiment, the side edge portion 80a of the back cover 80 is formed with a pawl 80c. The pawl 80c catches a recess 46g in an inner surface of the rear edge portion 46e, preventing the side edge portion 80a from moving rearward.

The back cover 80 described above has a plurality of fastening portions 86, 90 arranged along the side edge portion 80a. As shown in Fig. 11, the hole 90a in the fastening portion 90 has a greater diameter than an outer diameter of the screw 92 which is inserted into the hole 90a. This allows for a slight alignment error for the fastening portion 90 with respect to the back cover mounting portion 46c. Likewise, the hole 86a in the fastening portion 86 has a greater diameter than an outer diameter of the screw 88 which is inserted into the hole 86a. This allows for a slight alignment error for the fastening portion 86 with respect to the back cover mounting portion 76 which is formed in the reflector 56. Utilizing this as an advantage, if the back cover mounting portion 76, 46c and/or the fastening portion 86, 90 are out of proper alignment due to manufacturing error, these members are fixed as slightly out of alignment. This reduces unwanted gaps between the upper edge portion 44p of the front cover 40 and the upper edge portion 80b of the back cover 80, as well as between the rear edge portions 44r, 46e of the front cover 40 and the side edge portion 80a of the back cover 80. It should be noted here that the diameter of the hole 46f in the back cover mounting portion 46c is so designed and the outer diameter of the screw 92 is so selected that the screw 92 can be threaded into the hole 46f. Likewise, the diameter of the hole 76a in the back cover mounting portion 76 is so designed and the outer diameter of the screw 88 is so selected that the screw 88 can be threaded into the hole 76a.

According to the motorcycle 10 as has been described thus far, the back cover 80 is mounted to the lighting equipment 50, and therefore it is possible to reduce undue decrease in the supporting strength for supporting the back cover 80 even if the front cover 40 has a decreased rigidity due to the length of the lighting equipment 50. Also, it is possible to shorten the back cover mounting portions 76, since the back cover mounting portions 76 to which the back cover 80 is mounted are included in the lighting equipment 50, and the distance between the back cover 80 and the lighting equipment 50 is short. Therefore, it becomes easy to ensure that the back cover mounting portion 76 has an appropriate rigidity, and it is now possible to reduce undue decrease in the supporting strength for supporting the back cover 80. Further, in selecting locations for the back cover mounting portions 76, the lighting equipment 50 are no longer an obstacle, so the present invention increases freedom in selecting locations for the back cover mounting portions 76.

According to the motorcycle 10, the lighting equipment 50 has a front cover mounting portion 68 and a plurality of front cover mounting portions 70 whereas the front cover 40 has a fastening portion 44h and a plurality of fastening portions 44i respectively for fastening the front cover mounting portion 68 and the front cover mounting portions 70. Then, the front cover mounting portions 68, 70 and the fastening portions 44h, 44i are fitted to each other, restricting each other from moving in directions perpendicular to their fitting direction. This means that it is possible to make positioning of the fastening portions 44h, 44i, using the front cover mounting portions 68, 70. As a result, it is possible to reduce relative positional error of the lighting equipment 50 with respect to the upper edge portion 44b and the lower edge portion 44c of the opening 44a in the front cover 40. In other words, it is possible to provide appropriate clearance between the upper edge portion 44b and the front surface of the lighting equipment 50, as well as between the lower edge portion 44c and the front surface of the lighting equipment 50, within the opening 44a in the front side-cover portion 44.

According to the motorcycle 10, all of the front cover mounting portions 68, 70 are formed in a single constituent member (in the reflector 56 in the present embodiment) of the lighting equipment 50. If all of the front cover mounting portions 68, 70 are not formed in a single member; for example, in a case where the front cover mounting portion 68 and some of the front cover mounting portions 70 are formed in the reflector 56 while the rest of the front cover mounting portions 70 are formed in the lens cover 66, a relative positional error between the reflector 56 and the lens cover 66 leads to a relative positional error of the lighting equipment 50 with respect to the upper edge portion 44b and the lower edge portion 44c of the opening 44a in the front cover 40. According to the motorcycle 10, however, all of the front cover mounting portions 68, 70 are formed in a single member, and this reduces relative positional error in any of the front cover mounting portions 68, 70. As a result, it is possible to reduce relative positional error of the lighting equipment 50 with respect to the upper edge portion 44b and the lower edge portion 44c of the opening 44a in the front cover 40.

According to the motorcycle 10, the back cover 80 has the fastening portions 86 for fastening to the back cover mounting portions 76; and has the upper edge portions 80b and the side edge portions 80a which are formed to follow the upper edge portions 44p and the rear edge portions 44r, 46e of the front cover 40. Then, each of the fastening portions 86 of the back cover 80 has the hole 86a for insertion of the screw 88 for fixing the fastening portion 86 to the back cover mounting portion 76. The hole 86a has a greater diameter than a diameter of the screw 88. This allows for a slight error in the relative position between the fastening portion 86 and the back cover mounting portion 76. Namely, even if the fastening portion 86 or the back cover mounting portion 76 is out of proper alignment due to manufacturing error, the fastening portion 86 and the back cover mounting portion 76 are fixed to each other by the screw 88, as slightly out of alignment. This reduces unwanted gaps between the upper edge portion 44p of the front cover 40 and the upper edge portion 80b of the back cover 80, as well as between the rear edge portions 44r, 46e of the front cover 40 and the side edge portion 80a of the back cover 80.

According to the motorcycle 10, the front cover mounting portions 68, 70 and the back cover mounting portions 76 are formed in a single member (in the reflector 56 in the present embodiment). If the front cover mounting portions 68, 70 and the back cover mounting portions 76 are formed in different members; for example, in a case where the back cover mounting portions 76 are formed in the reflector 56 while the front cover mounting portions 68, 70 are formed in the lens cover 66, a relative positional error between the reflector 56 and the lens cover 66 can be a cause of a gap between the upper edge portion 44p of the front cover 40 and the upper edge portion 80b of the back cover 80, as well as between the rear edge portions 44r, 46e of the front cover 40 and the side edge portion 80a of the back cover 80. However, according to the motorcycle 10, the front cover mounting portions 68, 70 and the back cover mounting portions 76 are formed in a single member, and this reduces a case where there is an error in relative positions between the front cover mounting portions 68, 70 and the back cover mounting portions 76. As a result, it is possible to reduce unwanted gaps between the upper edge portion 44p of the front cover 40 and the upper edge portion 80b of the back cover 80, as well as between the rear edge portions 44r, 46e of the front cover 40 and the side edge portion 80a of the back cover 80.

It should be noted that the present invention is not limited to the motorcycle 10 described above, but may be varied in many ways. For example, in the above description, the front cover 40 has lower side-cover portions 46 in its lower region, and the lower side-cover portions 46 are formed integrally with the front side-cover portions 44 which are portions for an upper region. However, the front side-cover portions 44 and the lower side-cover portions 46 may be separate members.

In the motorcycle 10, the connecting portion 44g, which connects the upper cover portion 44e and the lower cover portion 44f with each other, is exposed in the surface of the motorcycle body. However, the lighting equipment 50 may be extended further in the rearward direction, so that the connecting portion 44g may be hidden by the lighting equipment 50. Also, the lighting equipment 50 may be extended further, and the connecting portion 44g need not be provided. Namely, the upper cover portion 44e and the lower cover portion 44f need not be connected with each other at a rear end region of the lighting equipment 50.

In the motorcycle 10, the reflector 56 has a cutout 56i, so that light from the bulb 52 which travels obliquely rearward passes through a side lens 62 and then into the air. However, a bulb may be provided inside the side lens 64, in addition to the bulbs 52, 54.

In the motorcycle 10, one piece of lighting equipment 50 has two bulbs 52, 54. However, one piece of lighting equipment 50 may have one bulb.

In the motorcycle 10, the back cover mounting portions 76 are formed in the outer frame portion 56d. However, the back cover mounting portions 76 may be formed in the wall portion 56g of the reflector 56 (see Fig. 6).

It should be noted here that the screws 72, 74, 88 and 92 may be replaced with bolts or other fasteners. Even in cases where the screws 88 and 92 are replaced with bolts or other fasteners, the hole 86a in the fastening portion 86 is arranged to have a larger diameter than an outer diameter of the fastener which is to be inserted into the hole 86a; likewise, the hole 90a in the fastening portion 90 is arranged to have a larger diameter than an outer diameter of the fastener which is to be inserted into the hole 90a.

The present invention being thus far described in terms of preferred embodiments, it is obvious that these may be varied in many ways within the scope of the present invention. The scope of the present invention is only limited by the accompanied claims.

### LEGEND

- 10: Motorcycle
- 12: Motorcycle body frame
- 40: Front cover
- 42: Front center cover portion
- 44: Front side-cover portion
- 44a: Opening
- 44b, 44p, 80b, 82b: Upper edge portions
- 44c: Lower edge portion
- 44e: Upper cover portion
- 44f: Lower cover portion
- 44h, 44i, 86, 90: Fastening portions
- 441, 44o, 46f, 68a, 70a, 76a, 86a, 90a: Holes
- 44r, 46e: Rear edge portions
- 46: Lower side-cover portion
- 46c: Back cover mounting portion
- 50: Lighting equipment
- 52, 54: Bulbs
- 56: Reflector
- 58, 60: Lenses
- 64: Lens frame
- 66: Lens cover
- 68, 70: Front cover mounting portions
- 72, 74, 88, 92: Screws
- 76: Back cover mounting portion
- 80: Back cover
- 80a: Side edge portion
- 82: Center cover portion
- 84: Side cover portion

## Claims

1. A motorcycle (10) comprising:
left and right lighting equipments (50) each including at least one first mounting portion (68,70) and at least one second mounting portion (76);
a front cover (40) having a left and right opening (44a), each with a closed edge line for the lighting equipment (50) to expose a front surface thereof, mounted to expose the front surface of the lighting equipment (50) from the opening (44a) and connected with the lighting equipment (50) via the first mounting portion (68,70), wherein the opening (44a) has an upper edge portion (44b) and a lower edge portion (44c) which are formed to follow the front surface of the lighting equipment (50); and
a back cover (80) mounted to cover the lighting equipment (50) and the front cover (40) from behind, and connected with the lighting equipment (50) via the second mounting portion (76),
**characterized in that**
each of the lighting equipments (50) has a plurality of second mounting portions (76), the back cover (80) having a plurality of second fastening portions (86) for fastening to the second mounting portions (76), and an edge portion (80a, 80b) formed to follow an edge portion (44l, 44p, 44r) of the front cover (40),
the motorcycle (10) further comprising fasteners (88) for fastening the second fastening portions (86) to the second mounting portions (76),
the second fastening portions (86) having a hole (86a) for insertion of the fastener, the hole (86a) having a greater diameter than a diameter of the fastener.

2. The motorcycle (10) according to claim 1, wherein the front cover (40) has for each said lighting equipment a first fastening portion (44h,44i) for fastening to the first mounting portion (68,70), the first mounting portion (68,70) and the first fastening portion (44h,44i) being fitted to each other, thereby being restricted in relative movement in directions perpendicular to a direction of the fitting.

3. The motorcycle (10) according to claim 2, wherein each said lighting equipment (50) has a plurality of the first mounting portions (68,70), the first mounting portions (68,70) being formed in a single member included in the lighting equipment (50).

4. The motorcycle (10) according to claim 1, wherein for each said lighting equipment the first mounting portion (68,70) and the second mounting portion (76) are formed in a single member included in the lighting equipment (50).

## Patentansprüche

1. Motorrad (10), das umfasst:
eine linke und eine rechte Beleuchtungseinrichtung (50), die jeweils wenigstens einen ersten Anbringungsabschnitt (68, 70) und wenigstens einen zweiten Anbringungsabschnitt (76) enthalten;
eine vordere Verkleidung (40), die eine linke und eine rechte Öffnung (44a), jeweils mit einer geschlossenen Randlinie für die Beleuchtungseinrichtung (50), aufweist und eine vordere Fläche derselben freilegen, die so angebracht ist, dass die vordere Fläche der Beleuchtungseinrichtung (50) über die Öffnung (44a) freigelegt wird, und die mit der Beleuchtungseinrichtung (50) über den ersten Anbringungsabschnitt (68, 70) verbunden ist, wobei die Öffnung (44a) einen oberen Randabschnitt (44b) sowie einen unteren Randabschnitt (44c) hat, die so geformt sind, dass sie der vorderen Fläche der Beleuchtungseinrichtung (50) folgen; und
eine hintere Verkleidung (80), die so angebracht ist, dass sie die Beleuchtungseinrichtung (50) sowie die vordere Verkleidung von hinten abdeckt, und die über den zweiten Anbringungsabschnitt (76) mit der Beleuchtungseinrichtung (50) verbunden ist,
**dadurch gekennzeichnet, dass**
jede der Beleuchtungseinrichtungen (50) eine Vielzahl zweiter Anbringungsabschnitte (76) aufweist,
die hintere Verkleidung (80) eine Vielzahl zweiter Befestigungsabschnitte (86) zum Befestigen an den zweiten Anbringungsabschnitten (76) sowie einen Randabschnitt (80a, 80b) aufweist, der so geformt ist, dass er einem Randabschnitt (441, 44p, 44r) der vorderen Verkleidung (40) folgt,
wobei das Motorrad (10) des Weiteren Befestigungselemente (88) zum Befestigen der zweiten Befestigungsabschnitte (86) an den zweiten Anbringungsabschnitten (76) umfasst,
die zweiten Befestigungsabschnitte (86) ein Loch (86a) zum Einführen des Befestigungselementes aufweisen und das Loch (86) einen Durchmesser hat, der größer ist als ein Durchmesser des Befestigungselementes.

2. Motorrad (10) nach Anspruch 1, wobei die vordere Verkleidung (40) für jede der Beleuchtungseinrichtungen einen ersten Befestigungsabschnitt (44h, 44i) zum Befestigen an dem ersten Anbringungsabschnitt (68, 70) aufweist, und der erste Anbringungsabschnitt (68, 70) und der erste Befestigungsabschnitt (44h, 44i) zusammengesetzt sind und so hinsichtlich relativer Bewegung in Richtungen senkrecht zu einer Richtung zum Zusammensetzen eingeschränkt sind.

3. Motorrad (10) nach Anspruch 2, wobei jede der Beleuchtungseinrichtungen (50) eine Vielzahl der ersten Anbringungsabschnitte (68, 70) aufweist und die ersten Anbringungsabschnitte (68, 70) in einem einteiligen Element ausgebildet sind, das in der Beleuchtungseinrichtung (50) enthalten ist.

4. Motorrad (10) nach Anspruch 1, wobei für jede der Beleuchtungseinrichtungen der erste Anbringungsabschnitt (68, 70) und der zweite Anbringungsabschnitt (76) in einem einteiligen Element ausgebildet sind, das in der Beleuchtungseinrichtung (50) enthalten ist.

## Revendications

1. Motocyclette (10) comprenant :
- des équipements d'éclairage (50) comprenant chacun au moins une première partie de montage (68, 70) et au moins une seconde partie de montage (76) ;
- une couverture avant (40) comportant une ouverture gauche et droite (44a), chacune avec une ligne de bord fermée pour l'équipement d'éclairage (50) afin d'exposer une surface avant de celui-ci, montée pour exposer la surface avant de l'équipement d'éclairage (50) depuis l'ouverture (44a) et connectée avec l'équipement d'éclairage (50) via la première partie de montage (68, 70), dans laquelle l'ouverture (44a) comportent une partie de bord supérieur (44b) et une partie de bord inférieur (44c) conformées pour prolonger la surface avant de l'équipement d'éclairage (50) ; et
- une couverture arrière (80) montée pour couvrir l'équipement d'éclairage (50) et la couverture avant (40) depuis l'arrière et connectée à l'équipement d'éclairage (50) via la seconde partie de montage (76),
- **caractérisée en ce que** :
- chacun des équipements d'éclairage (50) comporte une pluralité de secondes parties de montage (76) ;
- la couverture arrière (80) comportant une pluralité de secondes parties de fixation (86) pour la fixer aux secondes parties de montage (76) et une partie de bord (80a, 80b) conformée pour prolonger une partie de bord (441, 44p, 44r) de la couverture avant (40) ;
- la motocyclette (10) comprenant en outre des éléments de fixations (68) pour fixer les secondes parties de fixation (86) aux secondes parties de montage (76) ;
- les secondes parties de fixation (86) comportant un trou (86a) pour une insertion de l'élément de fixation, le trou (86a) ayant un diamètre plus important qu'un diamètre de l'élément de fixation.

2. Motocyclette (10) selon la revendication 1, dans laquelle la couverture avant (40) comporte, pour chacun desdits équipements d'éclairage, une première partie de fixation (44h, 44i) pour la fixer à la première partie de montage (68, 70), la première partie de montage (68, 70) et la première partie de fixation (44h, 44i) étant adaptées l'une à l'autre, étant ainsi restreintes en mouvement relatif dans des directions perpendiculaires à une direction de l'adaptation.

3. Motocyclette (10) selon la revendication 2, dans laquelle chacun desdits équipements d'éclairage (50) comporte une pluralité de premières parties de montage (68, 70), les premières parties de montage (68, 70) étant formées en un unique élément inclus dans l'équipement d'éclairage (50).

4. Motocyclette (10) selon la revendication 1, dans laquelle, pour chacun desdits équipements d'éclairage, la première partie de montage (68, 70) et la seconde partie de montage (76) sont formées en un unique élément inclus dans l'équipement d'éclairage (50).
